# EUROPEAN PATENT SPECIFICATION

(11) **EP 1 180 297 B1**
(45) Date of publication and mention of the grant of the patent: **24.06.2009**
(21) Application number: 00929980.1
(22) Date of filing: 19.04.2000
(51) Int. Cl.: H04M 3/42, H04W 4/00

(54) **A METHOD AND SYSTEM ADAPTED TO PROVIDE VALUE ADDED SERVICES TO MOBILE TELEPHONY SUBSCRIBERS**
VERFAHREN UND SYSTEM ZUR BEREITSTELLUNG VON MEHRWERTDIENSTEN FÜR MOBILE FERNSPRECHTEILNEHMER
PROCEDE ET SYSTEME POUR OFFRIR DES SERVICES A VALEUR AJOUTEE A DES ABONNES DE TELEPHONIE MOBILE

(30) Priority: 27.04.1999 SE 9901509
(43) Date of publication of application: 20.02.2002
(73) Proprietor: TELIASONERA AB, 106 63 Stockholm (SE)
(72) Inventor: ANDERSSON, Annette, S-653 50 Karlstad (SE); BLOMKVIST, Hakan, S-653 50 Karlstad (SE); EMILSSON, Stellan, S-655 94 Karlstad (SE); GUSTAFSSON, Jan, S-653 30 Karlstad (SE)
(74) Representative: Hopfgarten, Nils
(86) International application number: PCT/SE2000/000751
(87) International publication number: WO 2000/065812

(56) References cited:
- WO-A1-97/44973
- WO-A1-97/50263
- WO-A1-98/03005

## Description

The present invention relates to a telecommunications system adapted to facilitate the introduction of new value added services, without using an operator's personnel resources, and permit subscriber's to personalise the value added services they use, a service platform for use with the system, subscriber terminals for use with the system, a method for the provision and registration of new value added services for the system.

The ability to offer subscribers a varied and interesting range of services is, in general, an on-going objective of operators. New technology and personal creativity provide the means by which new and improved mobile services can be created and offered to subscribers, Despite this, there is today a relatively limited range of mobile services on offer to subscribers. One reasons for this is that the introduction of new mobile services is a labourious, technically complicated and time consuming exercise, and there is no sufficiently smooth, or standardised, way for service providers to offer their special services to an operator's subscribers.

WO9744973 discloses compressing a software specification software language to permit a compressed format of the software specification to be distributed to cellular telephones using limited bandwidth. The cellular telephones are able to decompress the compressed format using a corresponding decompression process.

The following problems need to be solved in order to create an interest in mobile services:
- there must be a rapid and simple procedure for the introduction of new services produced by both an operator and external companies (service providers);
- to enable an operator to handle a large volume of services simply, they must be handled in a unified manner, and it should be possible for the service provider, who has produced a service, to be able to carry out maintenance on that service;
- it must be simple for an operator to administer and secure payment for the services he provides;
- an operator's customers should have the opportunity to personalise services themselves, including those offered by service providers, via an operator, i.e. create their own tailored services and user interfaces for these services;
- subscribers should not be tied to a specific terminal type in order to be able to use mobile services, i.e. subscribers should be able to access the same services independently of the terminal to which the subscriber currently has access;
- Cell Broadcast should be available as an important entry gate for mobile data services;
- mobile services must be adapted so that they utilise the available radio resources in an effective manner;
- it should be possible to rapidly distribute user interfaces, in the form of menus, to mobile telephones, so that it is possible to create more interactive and user-friendly services.

It is an object of the present invention to provide a solution to at least some of the foregoing problems by providing a telecommunications system which is adapted to facilitate the introduction of new service provider services, without using the operator's personnel resources, and permit subscriber's to personalise the services they use.

It is another object of the present invention to provide a service platform for use with the telecommunications system.

It is another object of the present invention to provide mobile subscriber terminals for use with the telecommunications system.

It is another object of the present invention to provide a method for the provision and registration of new value added services for the telecommunications system.

According to a first aspect of the present invention, there is provided, a telecommunications system, adapted to provide value added services to mobile telephony subscribers, comprising a telecommunications operator's server, a plurality of mobile subscriber terminals, at least one service provider's server and data storage means, characterised in that said at least one service provider's server is adapted to communicate with said operator's server, to provide new valued added service for mobile telephony subscribers, and to register said services with said operator's server by transmitting information describing each service to said operator's server, said service related information including a call address to be used by said operator's server when executing a respective service.

The said at least one service provider's server may be adapted provide a value added service in the form of a source code, without the service being executed by the service provider.

The telecommunications system may be adapted to control behaviour of a service using at least one parameter value which is added when the service is called.

The telecommunications system may be adapted to assign a unique service identity to each value added service for use in making a call for a respective service.

The call address may include an ip-address and a gate number.

The service information may includes one, or more, of the following items of data for each service, namely, an address for an information page from which an understanding of said service can be obtained by the operator, or subscribers wishing to access said service; a name for said service; and a user interface. The information page address may be in the form of a web site address. The user interface may facilitate selection of parameters to be set when a service is executed. The user interface may be adapted to enable said operator's server to transmit information, defining input data required when a service is executed, to a mobile subscriber terminal. The user interface may be in the form of an HTML code.

The said plurality of mobile telephone terminals may be adapted to communicate with said operator's server.

The data storage means may contain a service database and a database of services personalised by subscribers, and each of said databases may be adapted to communicate with said operator's server.

The telecommunications system may include a plurality of service provider's servers, each of which is adapted to communicate with said operator's server.

On receipt of information from a service provider's server relating to a new value added service, said operator's server assigns a unique identity to said new value added service.

The said operator's server may be adapted to store, in said service database, said service related information transmitted by a service provider's server, on registration of a new value added service.

The telecommunications system may be adapted to enable a subscriber to personalise an offered service by setting parameters for the service using said user interface. The said system may be adapted to make available a function for extracting and compiling the parameter settings, made by the subscriber using the user interface, and to store said parameter settings in said database of services personalised by a subscriber. The said system may be adapted to administer and control said value added services and service providers.

All requests for value added services made to said operator's server cause said service database to be accessed, thereby providing a basis for charging for provision of said value added services.

According to a second aspect of the present invention, there is provided, a telecommunications service platform for the provision of value added services to mobile transceivers suitable for use with a telecommunications system as outlined in preceding paragraphs, characterised in that there is provided a telecommunications operator's server adapted to operate connections to a plurality of mobile subscriber terminals, to at least one service provider's server; and to a data storage means, and in that said storage means contains a service data base and a database of services personalised by subscribers.

According to a third aspect of the present invention, there is provided, a mobile subscriber terminal, characterised in that said terminal is adapted to operate with a telecommunications system as outlined in preceding paragraphs.

According to a fourth aspect of the present invention, there is provided, a method of operating a telecommunications system, adapted to provide value added services to mobile telephony subscribers, said telecommunications system comprising a telecommunications operator's server, a plurality of mobile subscriber terminals, at least one service provider's server and data storage means, characterised by said at least one service provider's server communicating with said operator's server; providing new valued added service for mobile telephony subscribers; and registering said services with said operator's server by transmitting information describing each service to said operator's server, said service related information including a call address to be used by said operator's server when executing a respective service.

The method may be further characterised by a value added services being provided in the form of a source code, without the need for the service to be executed by the service provider.

The method may be further characterised by controlling behaviour of a service using at least one parameter value which is added when the service is called.

The method may be further characterised by assigning a unique service identity to each services for use in making a call for a respective service.

The method may be further characterised by said call address including an ip-address and a gate number.

The method may be further characterised by including in said service information one, or more, of the following items of data for each service, namely, an address for an information page from which an understanding of said service can be obtained by the operator, or subscribers wishing to access said service; a name for said service; and a user interface. This method may be further characterised by using said user interface to select parameters to be set when a service is executed. This method may be still further characterised by using said user interface to transmit information, defining input data required when a service is executed, from said operator's server to a mobile subscriber terminal.

The method may be further characterised by said operator's server communicating with each of said plurality of mobile telephone terminals.

The method may be further characterised by said data storage means containing a service database and a database of services personalised by subscribers, and by each of said databases communicating with said operator's server.

The method may be further characterised by said system including a plurality of service provider's servers, and by said operator's server communicating with each of said service provider's servers.

The method may be further characterised by said operator's server, on receipt of information from a service provider's server relating to a new value added service, assigning a unique identity to said new service.

The method may be further characterised by said operator's server storing, in said service database, said service related information transmitted by a service provider's server, on registration of a new value added service.

The method may be further characterised by a subscriber personalising an offered service by setting parameters for the service using said user interface.

The method may be further characterised by making a function available for extracting and compiling the parameter settings, made by the subscriber using the user interface, and by storing said parameter settings in said database of services personalised by a subscriber.

The method may be further characterised by said value added services and service providers being administered and controlled by an operator.

The method may be further characterised by making charging for provision of said value added services to a subscriber on the basis all requests made, by the subscriber, for value added services to said operator's server.

The foregoing and other features of the present invention will be better understood from the following description with reference to the accompanying drawings, in which:
Figure 1 diagrammatically illustrates, in the form of a block diagram, a telecommunications system adapted for registering a service with an operator of the system; and
Figure 2 diagrammatically illustrates, in the form of a block diagram, the telecommunications system of Figure 1 when used, by a subscriber, to call a service.

It will be seen from the subsequent description that, in accordance with the present invention, the introduction of a new mobile service for an operator, is raised in the form of a source code, without the need for the new service to be executed by the service provider who produced the new service. In particular, a service provider, when introducing a new service for an operator, sends information to the operator describing the new service and what it should be called, for example, the call address, service name, any possible user interface, etc.. The information is stored by the operator and given a unique identity. The operator makes the new service available to subscribers by entering it in an appropriate service database, which is used by subscribers wishing to personalise and use the service concerned. The operator then provides all, or part, of the information to the subscriber when he/she calls the service database concerned, after which the subscriber may refer to the service by name, or in any other way, in his/her service call. The present invention may be used when an operator wishes to give subscribers an opportunity, on the basis of a general service, to create their own personalised services. In particular, subscribers may be given the opportunity to enter their own parameter values in the system via a fixed, or radio, connection.

Thus, the present invention facilitates the relatively rapid introduction of new service provider services without an operator's personnel resources being utilised. However, the operator continues to have complete control over:
the service providers who are able to use the new infrastructure and offer their value added services to the operator's subscribers; and
the number of calls made to the value added services offered by these service providers.

The present invention may be used as a freestanding technology, but may also be included as a component in the invention covered by our patent publication EP1180295 which provides a system architecture, adapted to facilitate the provision of services to mobile telephone subscribers, which simplifies the introduction of new services, and which is based, at least in part, on the inventive concepts in:

Our patent publication WO9963767 relating to the effective updating of service logic in mobile telephones. This patent application describes how menu-based services can be downloaded in the form of a data structure instead of downloading an executable code. This makes it practical to distribute menu-based services to a mobile telephone in an effective manner.

Our patent publication EP1177672 relating to implicitly referred services. This patent application is concerned with an extension of the principle described in our co-pending publication WO9963767, which further streamlines downloading of menu-based services to mobile telephones. This idea is, moreover, not based on calling a service from a mobile telephone directly, but sending a message to a function in the network, a service node, containing a reference to a particular service. In this way, it is possible to simplify a service call from a mobile telephone and then add necessary information in the service node. Use of this method also makes it possible to reduce the information which needs to be sent from the mobile telephone to the network, i.e. the use made of scarce radio resource.

Our patent publication EP1181804 relating to subscriber controlled personalisation of mobile services. This patent application is concerned with the manner in which a subscriber can tailor calls to different services by using an internet-connected PC to enter values for the parameters to be included when a service is called.

The system architecture of our patent publication EP1180295 permits subscribers to control the personalisation of the services which they use. Furthermore, since the system architecture permits a subscriber to modify the personalisation of services using a PC operating over, for example, the Internet, this architecture reduces the use of radio resource. In other words, the system architecture offers a simplified means for introducing new service provider services, subscriber-con trolled personalising of the new services, and radio resource-saving mobile services.

In accordance with the present invention, a new value added service, produced by a service provider for an operator, is raised in the form of a source code, without the new value added service being executed by the service provider. In other words, the service provider sends a report to the operator containing information describing the new value added service and what it is to be called. This information is stored by the operator, for use by subscribers wishing to personalise and use the new value added service, and given a unique identity.

The new value added services may be parameter-controlled, which means that the behaviour of a service can be controlled with the aid of the value of one, or more, parameters added when the service is called. Alternatively, a simpler, solution may be employed whereby value added services are called without the need for input parameters.

The stored information supplied by the service provider may then be provided either in all, or in part, to a network user/subscriber. For example, it is appropriate that subscribers are not aware of the service address, but instead have available a service identity, or service name, by means of which they can refer to the service in a service call.

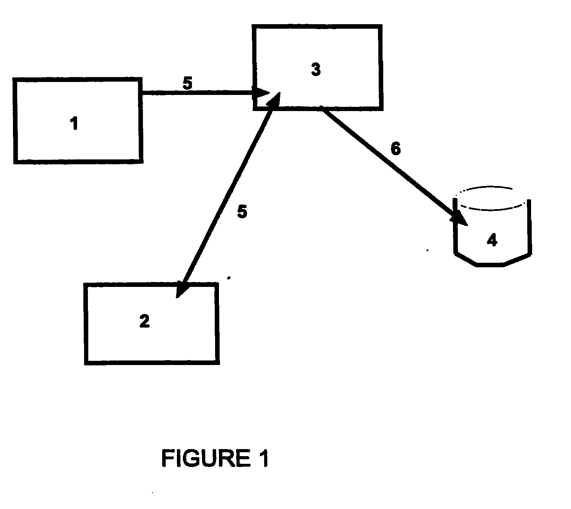

Figure 1 diagrammatically illustrates, in the form of a block diagram, a possible scenario for a telecommunications system, according to the present invention, for registering a value added service with, or reporting a value added service to, an operator of the system. A telecommunications operator's server, 3, can be connected to:
(-) a service server, 1, responsible for the provision of a service 'A' and holding information on service 'A';
(-) a service server, 2, responsible for the provision of a service 'B' and holding information on service 'B'; and
(-) a service database, 4.

In addition, Figure 1 shows the following processes which can be performed by the system:
(-) registering of service 'A', indicated by operating process 5;
(-) registering of service 'B', indicated by operating process 5;
(-) saving service information, indicated by process 6, i.e. transfer of service information from the operator's server, 3, to the service database, 4.

The telecommunications system of the present invention has, of course, the ability to handle more than two value added services, although Figure 1 only shows provision for two value added services in the interests of simplicity in the description of the invention.

The service information, transferred to the service database, 4, for each of the services 'A' and 'B', includes the following:
(-) service identity;
(-) call address;
(-) information address; and
(-) user interface for parameter setting.

A service provider, wishing to offer value added services to an operator's subscribers, transmits data describing the value added service to the operator, but need not transmit the executable code for the service.

Registration of services 'A' and 'B', with the operator's server, is achieved by operating process 5, respectively between the service servers, 1 and 2, and the operator's server, 3.

When a service provider registers a value added service with an operator by means of operating process 5 of Figure 1, the following data is transmitted to the operator's server, 3:
A call address, which the operator must use to have the value added service executed. This address may, for example, consist of an ip-address and a gate number.
An address of an information page from which the operator, or the operator's subscribers, can obtain an understanding of the type of service being offered. The information page address may, for example, be specified in the form of a web site address (i.e. www.....). There are no special requirements concerning how the information should be presented, or arranged.
The name of the value added service.
A user interface intended to provide the operator and his subscribers with help in specifying the different values of the parameters to be entered when the value added service is used, i.e. being called, and, moreover, to give the operator an opportunity to send mobile telephones information on the input data required when the value added service is being called. The user interface may, for example, be transmitted in the form of an Hypertext Markup Language (HTML) code.

Of the four types of data, referred to above, the call address must be reported to the operator. The remaining three data types are not an absolute requirement, but should be included in order to ensure that an effective system solution can be offered.

When an operator receives information that a new value added service is available from a service provider, the operator gives the value added service a unique identity. The operator then makes the value added service available to subscribers by entering the information, received from the service provider in respect of the value added service, in the service database, 4, of Figure 1.

It a subscriber, or network user, wishes to personalised an offered value added service, he/she uses a user interface for setting the parameters of the service, thereby creating a personalised service. To set the parameters, the operator makes available a function that is adapted to extract and compile the parameter settings, which the subscriber has made via the user interface, and to save the parameter settings, in a database, as a personalised service for the subscriber concerned. An operator, or a company, for example, may also create 'personalised services' which can be offered to a wider group of subscribers.

Since an operator is capable of handling different types of value added services in a unified manner, the administration of service provider services and service providers is also undertaken by the operator.

Also, since a subscriber actively personalises the services he/she intends to use on the basis of the basic services available in a service database, the operator also obtains information on the services subscribers find interesting, even before they have been used. This information can then be used in different ways, for example, through providing service providers with timely information on how the value added services have been received.

Furthermore, since all service calls to a service provider proceed through information on the value added service being retrieved from the service database, it is relatively easy for the operator to obtain statistics on the number of service calls made to different service providers. This information can then be used, for example, as a basis for charging.

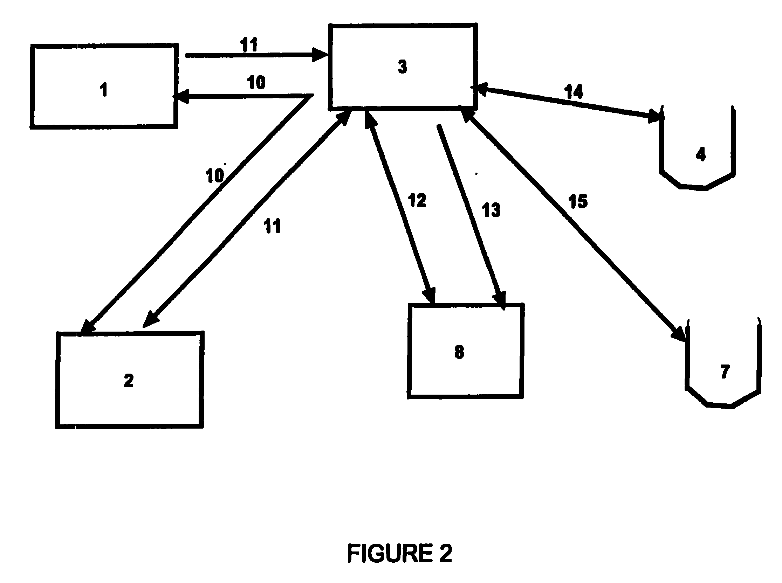

Figure 2 diagrammatically illustrates, in the form of a block diagram, the telecommunications system of Figure 1 when used, by a subscriber, to call a value added service. In Figure 2, the operator's server, 3, can also be connected to:
(-) a database, 7, containing details of personalised information, including service name, predetermined parameters and service identity;
(-) a subscriber terminal, 8, for example, a mobile terminal, or telephone handset.

The telecommunications system of the present invention can, of course, cater for a number of subscribers, although only a single subscriber connection is illustrated in Figure 2, in the interests of simplicity in the description of the invention. It should be noted that, although not shown in Figure 2, at least some of the subscribers may have personal computers (PCs) to facilitating the inputting of service parameters when personalising a value added service.

In addition, Figure 2 shows the following processes which are performed when a subscriber calls a value added service:
(-) service calls from operator's server, 3, indicated by operating process 10;
(-) replies to service calls from the operator's server, 3, indicated by operating process 11;
(-) service calls from subscriber terminal, 9, indicated by operating process 12;
(-) replies to service calls from subscriber terminal, 9, indicated by operating process, 13;
(-) downloading of service information to, and retrieving service information from, the service database, 4, indicated by operating process 14; and
(-) downloading of personalised information to, and retrieving personalised information from, the database, 7, indicated by operating process 15.

When a subscriber calls a value added service, he/she does not need to know exactly how the service call is to proceed (for example, ip-address and gate number) because, for each value added service, the service database contains information on how the service is to be called, i.e. both the service address and the type of information to be included in the caii. The operator adds the necessary information if a subscriber has referred to the value added service in a service call. An operator also has an opportunity to set values for the parameters required when a value added service is called.

Service calls containing input parameters, are routed from the operator's server, 3, to service server, 1, for service 'A', or service server, 2, for service 'B', using process 10.

The present invention is a general technology able to be used when an operator wishes to offer value added services which another player (service provider) has produced. This means that prerequisites are created for an operator to assume a new type of role, i.e. a service broker having the ability, to offer to his own subscribers, value added services which third party service providers have produced and are responsible for.

A subscriber can personalise a value added service to suit his own needs by inputting service parameters, via the operator's server, 3, to the service database, 4, and to the personalised services database, 7. The operating process, 14, is used to effect downloading of service information to, and retrieving of service information from, the service database, 4, and the operating process, 15, is used to effect downloading of personalised information to, and retrieving of personalised information from, the database, 7. The inputting of service parameters, by a subscriber, may be effected, via the operator's server, using the mobile terminal, 8, and/or an associated PC. Once a value added service has been personalised, the necessary parameters relating to the personalised service are downloaded, via the operator's server, 3, to the personalised services database, 7, using operating process, 15.

It will be directly evident to persons skilled in the art that use of the present invention is not limited to a mobile telephony system, for example, GSM (Global System for Mobile Communications), UMTS (Universal Mobile Telecommunications System), or the iike, and is not dependent on the carrier service used in the mobile telephone system to access the value added services, nor the terminal technology.

The manner in which the present invention is adapted to simplify reporting of mobile services, has not previously been known, in that only information on the value added services needs be reported, i.e. the executable code need not be disclosed. In addition, no personnel resources are needed from an operator to develop the new service provider services. Furthermore, the present invention provides a standardised way of introducing new value added services, regardless of who has produced the services and the services functionality. Thus, different service providers and different types of services can be supervised in a unified manner. An operator can, therefore, offer subscribers a unified user interface to different types of services which have been produced and which are executed by a large number of different service providers.

In accordance with the present invention, the service provider services, offered to an operator's subscribers, may be developed in any desired program language and executed on any desired platform, provided they can be called via the Internet. In addition, the present invention enables operators to offer subscribers new, interesting and more user-friendly services, and is intended to be used by operators when menu-based services are offered via radio channels with a limited bandwidth.

## Claims

1. A telecommunications system, adapted to provide value added services to mobile telephony subscribers, comprising a telecommunications operator's server (3), a plurality of mobile subscriber terminals (8) at least one service provider's server (1, 2) and data storage means (4, 7),
**characterised in that**
said at least one service provider's server (1, 2) is adapted to communicate with said operator's server (3) to provide at least one of said value added services for mobile telephony subscribers, and to register said services with said operator's server (3) by transmitting information describing each service to said operator's server (3), said service related information including a call address to be used by said operator's server (3) when executing said at least one of said value added services.

2. A telecommunications system as claimed in claim 1, **characterised in that** said at least one service provider's server (1, 2) is adapted provide a value added service in the form of a source code, without the service being executed by the service provider.

3. A telecommunications system as claimed in claim 1, or claim 2, **characterised in that** said system is adapted to control behaviour of a service using at least one parameter value which is added when the service is called.

4. A telecommunications system as claimed in any preceding claim, **characterised in that** said system is adapted to assign a unique service identity to each value added service for use in making a call for a respective service.

5. A telecommunications system as claimed in any preceding claim, **characterised in that** said call address includes an ip-address and a gate number.

6. A telecommunications system as claimed in any preceding claim, **characterised in that** said service information includes one, or more, of the following items of data for each service:
a n address for an information page from which an understanding of said service can be obtained by the operator, or subscribers wishing to access said service;
a name for said service; and
a user interface.

7. A telecommunications system as claimed in claim 6, **characterised in that** said information page address is in the form of a web site address.

8. A telecommunications system as claimed in claim 6, or claim 7, **characterised in that** said user interface facilitates selection of parameters to be set when a service is executed,

9. A telecommunications system as claimed in any of claims 6 to 8, **characterised in that** said user interface is adapted to enable said operator's server (3) to transmit information, defining input data required when a service is executed, to a mobile subscriber terminal (8).

10. A telecommunications system as claimed in any of claim 6 to 9, **characterised in that** said user interface is in the form of an HTML code.

11. A telecommunications system as claimed in any preceding claim, **characterised in that** said plurality of mobile telephone terminals (8) are adapted to communicate with said operator's server (3).

12. A telecommunications system as claimed in any preceding claim, **characterised in that** said data storage means (4, 7) contain a service database (4) and a database (7) of services personalised by subscribers, and **in that** each of said databases (4, 7) are adapted to communicate with said operator's server (3).

13. A telecommunications system as claimed in any preceding claim, **characterised in that** said system includes a plurality of service provider's servers (1, 2) each of which is adapted to communicate with said operator's server (3).

14. A telecommunications system as claimed in any previous claim, **characterised in that**, on receipt of information from a service provider's server (1, 2) relating to a new value added service, said operator's server (3) assigns a unique identity to said new value added service.

15. A telecommunications system as claimed in any of claims 12 to 14, **characterised in that** said operator's server (3) is adapted to store, in said service database (4), said service related information, transmitted by a service provider's server (1, 2), on registration of a new value added service.

16. A telecommunications system as claimed in any of claims 6 to 15, **characterised in that** said system is adapted to enable a subscriber to personalise an offered service by setting parameters for the service using said user interface.

17. A telecommunications system as claimed in claim 16, when appended to any of claims 12 to 15, **characterised in that** said system is adapted to make available a function for extracting and compiling the parameter settings, made by the subscriber using the user interface, and to store said parameter settings in said database (7) of services personalised by a subscriber.

18. A telecommunications system as claimed in claim 16, or claim 17, **characterised in that** said system is adapted to administer and control said value added services and service providers.

19. A telecommunications system as claimed in any of claims 12 to 18, **characterised in that** all requests for value added services made to said operator's server (3) cause said service database (4) to be accessed, thereby providing a basis for charging for provision of said value added services.

20. A telecommunications service platform for the provision of value added services to mobile transceivers suitable for use with a telecommunications system as claimed in any of claims 1 to 19, **characterised in that** there is provided a telecommunications operator's server (3) adapted to operate connections to:
- a plurality of mobile subscriber terminals (8);
- at least one service provider's server (1, 2), and
- a data storage means (4, 7),
and **in that** said storage means (4, 7) contains a service data base (4) and a database (7) of services personalised by subscribers.

21. A method of operating a telecommunications system, adapted to provide value added services to mobile telephony subscribers, said telecommunications system comprising a telecommunications operator's server (3), a plurality of mobile subscriber terminals (2), at least one service provider's server (1, 2) and data storage means (4, 7),
**characterised by**
said at least one service provider's server (1, 2);
- communicating with said operator's server (3).
- providing at least one of said value added services for mobile telephony subscriber; and
- registering said services with said operator's server (3) by transmitting information describing each service to said operator's server (3), said service related information including a call address to be used by said operator's server (3) when executing said at least one of said value added services.

22. A method as claimed in claim 21, **characterised by** a value added services being provided in the form of a source code, without the need for the service to be executed by the service provider.

23. A method as claimed in claim 21, for claim 22, **characterised by** controlling behaviour of a service using at least one parameter value which is added when the service is called.

24. A method as claimed in any of claims 21 to 23, **characterised by** assigning a unique service identity to each services for use in making a call for a respective service.

25. A method as claimed in any of claims 21 to 24, **characterised by** said call address including an ip-address and a gate number.

26. A method as claimed in any of claims 21 to 25, **characterised by** including in said service information, one, or more, of the following items of data for each service:
- an address for an information page from which an understanding of said service can be obtained by the operator, or subscribers wishing to access said service;
- a name for said services; and
- a user interface.

27. A method as claimed in claim 26, **characterised by** using said user interface to select parameters to be set when a service is executed.

28. A method as claimed in either claim 26, or claim 27, **characterised by** using said user interface to transmit information, defining input data required when a service is executed, from said operator's server (3) to a mobile subscriber terminal (8)

29. A method as claimed in any of claims 21 to 28, **characterised by** said operator's server (3) communicating with each of said plurality of mobile telephone terminals (8).

30. A method has claimed in any of claims 21 to 29, **characterised by** said data storage means (4, 7) containing a service database (4) and a database (7) of services personalised by subscribers, and by each of said databases (4, 7) communicating with said operator's server (3).

31. A method as claimed in any of claims 21 to 30 **characterised by** said system including a plurality of service provider's servers (1, 2) and by said operator's server (3) communicating with each of said service provider's servers (1, 2).

32. A method as claimed in any of claims 21 to 32, **characterised by** said operator's server (3) on receipt of information from a service provider's server (1, 2) relating to a new value added service, assigning a unique identity to said new service.

33. A method as claimed in any of claims 30 to 32, **characterised by** said operator's server (3) storing, in said service databases (4), said service related information transmitted by a service provider's server (1, 2) on registration of a new value added service.

34. A method as claimed in any of claims 26 to 33, **characterised by** a subscriber personalising an offered service by setting parameters for the service using said user interface,

35. A method as claimed in claim 34, when appended to any of claims 30 to 34, **characterised by** making a function available for extracting and compiling the parameter settings, made by the subscriber using the user interface, and by storing said parameter settings in said database (7) of services personalised by a subscriber,

36. A method as claimed in claim 34, or claim 35, **characterised by** said value added services and service providers being administered and controlled by an operator.

37. A method as claimed in any of claims 30 to 36 **characterised by** making charging for provision of said value added services to a subscriber on the basis all requests made, by the subscriber, for value added services to said operator's server (3).

## Patentansprüche

1. Telekommunikationssystem, welches dazu ausgebildet ist, Mehrwertdienste einem Mobiltelefonteilnehmer zu liefern, das einen Server (3) eines Telekommunikationsbetreibers, eine Mehrzahl von mobilen Teilnehmerendgeräten (8), wenigstens einen Dienstanbieterserver (1,2) und Datenspeichermittel (4,7) aufweist,
**dadurch gekennzeichnet, dass**
der wenigstens eine Dienstanbieterserver (1,2) dazu ausgebildet ist, mit dem Server (3) des Betreibers zu kommunizieren, um wenigstens einen der Mehrwertdienste für Mobiltelefonieteilnehmer zu liefern und die Dienste bei dem Server (3) des Betreibers zu registrieren, indem Information, die jeden Dienst beschreibt, zu dem Server (3) des Betreibers übertragen wird, welche dienstbezogene Information eine Rufadresse einschließt, die durch den Server (3) des Betreibers benutzt werden soll, wenn der wenigstens eine der Mehrwertdienste ausgeführt wird.

2. Telekommunikationssystem nach Anspruch 1, **dadurch gekennzeichnet, dass** der wenigstens eine Dienstanbieterserver (1,2) dazu ausgebildet ist, einen Mehrwertdienst in Form eines Quellcodes zu liefern, ohne dass der Dienst durch den Dienstanbieter ausgeführt wird.

3. Telekommunikationssystem nach Anspruch 1 oder Anspruch 2, **dadurch gekennzeichnet, dass** das System dazu ausgebildet ist, das Verhalten eines Dienstes unter Verwendung von wenigstens einem Parameterwert zu steuern oder zu kontrollieren, der hinzugefügt wird, wenn der Dienst aufgerufen wird.

4. Telekommunikationssystem nach einem vorangehenden Anspruch, **dadurch gekennzeichnet, dass** das System dazu ausgebildet ist, dass eine eindeutige Dienstidentität jedem Mehrwertdienst für Gebrauch bei Durchführung eines Anrufs für einen entsprechenden Dienst zugeordnet wird.

5. Telekommunikationssystem nach einem vorangehenden Anspruch, **dadurch gekennzeichnet, dass** die Rufadresse eine IP-Adresse und eine Tor- oder Gatternummer einschließt.

6. Telekommunikationssystem nach einem vorangehenden Anspruch, **dadurch gekennzeichnet, dass** die Dienstinformation einen oder mehrere der folgenden Datenelemente für jeden Dienst einschließt:
- eine Adresse für eine Informationsseite, von der ein Verständnis des Dienstes durch den Betreiber oder durch Teilnehmer, die auf diesen Dienst Zugriff nehmen wollen, erhalten werden kann;
- ein Name für diesen Dienst; und
- eine Benutzerschnittstelle.

7. Telekommunikationssystem nach Anspruch 6, **dadurch gekennzeichnet, dass** die Informationsseitenadresse in Form einer Websiteadresse ist.

8. Telekommunikationssystem nach Anspruch 6 oder Anspruch 7, **dadurch gekennzeichnet, dass** die Benutzerschnittstelle die Auswahl von Parametern erleichtert, die eingestellt werden sollen, wenn ein Dienst ausgeführt wird.

9. Telekommunikationssystem nach einem der Ansprüche 6 bis 8, **dadurch gekennzeichnet, dass** die Benutzerschnittstelle dazu ausgebildet ist, es dem Server (3) des Betreibers zu ermöglichen, Information, die Eingabedaten definiert, die erforderlich sind, wenn ein Dienst ausgeführt wird, zu dem mobilen Endgerät (8) eines Teilnehmers zu übertragen.

10. Telekommunikationssystem nach einem der Ansprüche 6 bis 9, **dadurch gekennzeichnet, dass** die Benutzerschnittstelle in der Form eines HTML-Codes ist.

11. Telekommunikationssystem nach einem vorangehenden Anspruch, **dadurch gekennzeichnet, dass** die Mehrzahl von mobilen Telefonendgeräten (8) dazu ausgebildet sind, mit dem Server (3) des Betreibers zu kommunizieren.

12. Telekommunikationssystem nach einem vorangehenden Anspruch, **dadurch gekennzeichnet, dass** die Datenspeichermittel (4,7) eine Dienstdatenbank (4) und eine Datenbank (7) von Diensten entfalten, die durch Teilnehmer personalisiert sind, und dass jede der Datenbanken (4,7) dazu ausgebildet ist, mit dem Server (3) des Betreibers zu kommunizieren.

13. Telekommunikationssystem nach einem vorangehenden Anspruch, **dadurch gekennzeichnet, dass** das System eine Mehrzahl von Dienstanbieterservern (1,2) einschließt, von denen jeder dazu ausgebildet ist, mit dem Server (3) des Betreibers zu kommunizieren.

14. Telekommunikationssystem nach einem der vorangehenden Anspruche, **dadurch gekennzeichnet, dass** bei Empfang von Information von einem Dienstanbieterserver (1,2), die sich auf einen neuen Mehrwertdienst bezieht, der Server (3) des Betreibers diesem neuen Mehrwertdienst eine eindeutige Identität zuordnet.

15. Telekommunikationssystem nach einem der Ansprüche 12 bis 14, **dadurch gekennzeichnet, dass** der Server (3) des Betreibers dazu ausgebildet ist, in der Dienstdatenbank (4) die dienstbezogene Information zu speichern, die durch einen Dienstanbieterserver (1,2) bei Registrierung eines neuen Mehrwertdienstes übertragen wird.

16. Telekommunikationssystem nach einem der Ansprüche 6 bis 15, **dadurch gekennzeichnet, dass** das System dazu ausgebildet ist, es einem Teilnehmer zu ermöglichen, einen angebotenen Dienst zu personalisieren, indem er Parameter für den Dienst unter Verwendung der Benutzerschnittstelle einstellt.

17. Telekommunikationssystem nach Anspruch 16, wenn abhängig von einem der Ansprüche 12 bis 15, **dadurch gekennzeichnet, dass** das System dazu ausgebildet ist, eine Funktion verfügbar zu maschen, die Parametereinstellungen zu extrahieren und zu kompilieren oder zu übersetzen, die durch den Teilnehmer unter Verwendung der Benutzerschnittstelle vorgenommen worden sind, und die Parametereinstellungen in der Datenbank (7) von Diensten zu speichern, die durch einen Teilnehmer personalisiert sind.

18. Telekommunikationssystem nach Anspruch 16 oder Anspruch 17, **dadurch gekennzeichnet, dass** das System dazu ausgebildet ist, die Mehrwertdienste und Dienstanbieter zu verwalten und zu kontrollieren.

19. Telekommunikationssystem nach einem der Ansprüche 12 bis 18, **dadurch** gekenntzeichnet, dass alle Anforderungen von Mehrwertdiensten, die an den Server (3) des Betreibers gerichtet werden, bewirken, dass auf die Dienstdatenbank (4) Zugriff genommen wird, wodurch eine Basis für die Rechnungsstellung für die Zurverfügungstellung der Mehrwertdienste geschaffen wird.

20. Telekommunikationsdienstplattform für die Zurverfügungstellung von Mehrwertdiensten zu mobilen Senderempfängern, die für Benutzung mit einem Telekommunikationssystem nach einem der Ansprüche 1 bis 19 geeignet ist **dadurch gekennzeichnet, dass** ein Server (3) eines Telekommunikationsbetreibers vorgesehen ist, der dazu ausgebildet ist, Verbindungen zu betreiben zu:
- einer Mehrzahl von mobilen Endgeräten (8) von Teilnehmern;
- wenigstens einem Dienstanbieterserver (1,2); und
- Datenspeichermitteln (4,7),
und dass die Speichermittel (4,7) eine Dienstdatenbank (4) und eine Datenbank (7) für Dienste enthält, die durch Teilnehmer personalisiert sind.

21. Verfahren zum Betreiben eines Telekommunikationssystems, das dazu ausgebildet ist, Mehrwertdienste zu Mobiltelefonieteilnehmern zu liefern, welches Telekommunikationssystem einen Server (3) eines Telekommunikationsbetreibers, eine Mehrzahl von mobilen Endgeräten (8) von Teilnehmern, wenigstens einen Dienstanbieterserver (1,2) und Datenspeichermittel (4,7) aufweist,
**dadurch gekennzeichnet,**
**dass** der wenigstens eine Dienstanbieterserver (1,2)
- mit dem Server (3) des Betreibers kommuniziert:
- wenigstens einen der Mehrwertdienste für Mobiltelefone teilnehmer zur Verfügung stellt; und
- **dass** die Dienste bei dem Server (3) des Betreibers registriert werden, indem eine Information, die jeden Dienst beschreibt, zu dem Server (3) des Betreibers übertragen wird, welche dienstbezogene Information eine Rufadresse einschließt, die durch den Server (3) des Betreibers benutzt werden muss, wenn wenigstens einer der Mehrwertdienste ausgeführt wird.

22. Verfahren nach Anspruch 21, **dadurch gekennzeichnet, dass** ein Mehrwertdienst in Form eines Quellcodes geliefert wird, ohne die Notwendigkeit, dass der Dienst durch den Dienstanbieter ausgeführt werden muss.

23. Verfahren nach Anspruch 21 oder Anspruch 22, **dadurch gekennzeichnet, dass** das Verhalten eines Dienstes gesteuert oder kontrolliert wird, indem wenigstens ein Parameterwert verwendet wird, der hinzugefügt wird, wenn der Dienst aufgerufen wird.

24. Verfahren nach einem der Ansprüche 21 bis 23, **dadurch gekennzeichnet, dass** eine eindeutige Dienstidentität jedem Dienst zugeordnet wird, die benutzt werden soll, wenn ein Anruf zu einem entsprechenden Dienst gemacht wird.

25. Verfahren nach einem der Ansprüche 21 bis 24, **dadurch gekennzeichnet, dass** die Rufadresse eine IP-Adresse und eine Gatter- oder Tornummer einschließt.

26. Verfahren nach einem der Ansprüche 21 bis 25, **dadurch gekennzeichnet, dass** in die Dienstinformation ein oder mehr der folgenden Datenelemente für jeden Dienst eingeschlossen wird:
- eine Adresse für eine Informationsseite, von der ein Verständnis des Dienstes durch den Betreiber oder Teilnehmern erhalten werden kann, die auf den Dienst Zugriff nehmen wollen;
- ein Name für diesen Dienst; und
- eine Benutzerschnittstelle.

27. Verfahren nach Anspruch 26, **dadurch** gekenntzeichnet, dass die Benutzerschnittstelle benutzt wird, Parameter auszuwählen, die eingestellt werden müssen, wenn ein Dienst ausgeführt wird.

28. Verfahren nach Anspruch 26 oder Anspruch 27, **dadurch gekennzeichnet, dass** die Benutzerschnittstelle benutzt wird, Information, die die Eingabedaten definiert, die erforderlich sind, wenn ein Dienst ausgeführt wird, von dem Server (3) des Betreibers zu einem mobilen Endgerät (8) eines Teilnehmers zu übertragen.

29. Verfahren nach einem der Ansprüche 21 bis 28, **dadurch gekennzeichnet, dass** der Server (3) des Betreibers mit jedem der Mehrzahl von Mobiltelefonendgeräten (8) kommuniziert.

30. Verfahren nach einem der Ansprüche 21 bis 29, **dadurch gekennzeichnet, dass** die Datenspeichermittel (4,7) eine Dienstdatenbank (4) und eine Datenbank (7) von Diensten, die durch Teilnehmer personalisiert sind, enthält, und dass jede der Datenbanken (4,7) mit dem Server (3) des Betreibers kommunizielt.

31. Verfahren nach einem der Ansprüche 21 bis 30, **dadurch gekennzeichnet, dass** das System eine Mehrzahl von Dienstanbieterservern (1,2) von einschließt und dass der Server (3) des Betreibers mit jedem der Dienstanbieterserver (1,2) kommuniziert.

32. Verfahren nach einem der Ansprüche 21 bis 32, **dadurch gekennzeichnet, dass** der Server (3) des Betreibers bei Empfang von Information von einem Dienstanbieterserver (1,2), die sich auf einen neuen Mehrwertdienst bezieht, dem neuen Dienst eine eindeutige Identität zuordnet.

33. Verfahren nach einem der Ansprüche 30 bis 32, **dadurch gekennzeichnet, dass** der Server (3) des Betreibers in der Dienstdatenbank (4) die dienstbezogene Information speichert, die durch einen Dienstanbieterserver (1,2) bei Registrierung eines neuen Mehrwertdienstes übertragen wird.

34. Verfahren nach einem der Ansprüche 26 bis 33, **dadurch gekennzeichnet, dass** ein Teilnehmer einen angebotenen Dienst personalisiert, indem er/sie Parameter für den. Dienst unter Verwendung der Benutzerschnittstelle einstellt.

35. Verfahren nach Anspruch 34 wenn abhängig von einem der Ausprüche 30 bis 34, **dadurch gekennzeichnet, dass** es eine Funktion verfügbar macht, um die Parametereinstellungen zu extrahieren und zu kompilieren oder zu übersetzen, die durch den Teilnehmer unter Verwendung der Benutzerschnittstelle vorgenommen worden sind, und dass die Parametereinstellungen ein der Datenbank (7) von Diensten gespeichert werden, die durch einen Teilnehmer personalisiert sind.

36. Verfahren nach Anspruch 34 oder Anspruch 35, **dadurch gekennzeichnet, dass** die Mehrwertdienste und die Dienstanbieter durch einen Betreiber verwaltet und kontrolliert werden.

37. Verfahren nach einem der Ansprüche 30 bis 36, **dadurch gekennzeichnet, dass** Rechnungsstellung für Zurverfügungstellung der Mehrwertdienste zu einem Teilnehmer aufgrund aller Anforderungen vorgenommen wird, die ein Teilnehmer für Mehrwertdienste an dem Server (3) des Betreibers gerichtet hat.

## Revendications

1. Système de télécommunication, adapté afin de fournir des services à valeur ajoutée à des abonnés de téléphonie mobile, comprenant un serveur d'opérateur de télécommunication (3), une pluralité de terminaux mobiles d'abonnés (8), au moins un serveur de fournisseur de service (1, 2) et des moyens de mémorisation de données (4,7),
**caractérisé en ce que**
ledit au moins un serveur de fournisseur de service (1, 2) est adapté afin de communiquer avec ledit serveur d'opérateur (3) de manière à fournir au moins l'un desdits services à valeur ajoutée à des abonnés de téléphonie mobile, et à enregistrer lesdites services avec ledit serveur d'opérateur (3) en transmettant des informations décrivant chaque service audit serveur d'opérateur (3), lesdites informations associées au service comportant une adresse d'appel à utiliser par ledit serveur de l'opérateur (3) lors de l'exécution dudit au moins l'un desdits services à valeur ajoutée.

2. Système de télécommunications selon la revendication 1, **caractérisé en ce que** ledit au moins un serveur de fournisseur de service (1,2) est adapté de manière à fournir un service à valeur ajoutée sous la forme d'un code source, sans que le service soit exécuté par le fournisseur de service.

3. Système de télécommunications selon la revendication 1 ou 2, **caractérisé en ce que** ledit système est adapté de manière à commander le comportement d'un service en utilisant au moins une valeur de paramètre qui est ajoutée lorsque le service est appelé,

4. Système de télécommunication selon l'une quelconque des revendications précédentes, **caractérisé en ce que** ledit système est adapté de manière à attribuer une identité de service unique à chaque service à valeur ajoutée afin de l'utiliser lors de l'appel à un service respectif.

5. Système de télécommunication selon l'une quelconque des revendications précédentes, **caractérisé en ce que** ladite adresse d'appel comporte une adresse IP et un numéro de port.

6. Système de télécommunication selon l'une quelconque des revendications précédentes, **caractérisé en ce que** lesdites informations de service comportent un, ou plusieurs des éléments numériques suivants pour chaque service :
une adresse d'une page d'information par laquelle la compréhension dudit service peut être acquise par l'opérateur, ou les abonnés souhaitant accéder audit service ;
un nom dudit service ; et
une interface d'utilisateur.

7. Système de télécommunication selon la revendication 6, **caractérisé en ce que** ladite adresse de page d'information est sous la forme d'une adresse de site internet,

8. Système de télécommunication selon la revendication 6, ou 7, **caractérisé en ce que** ladite interface d'utilisateur facilité la sélection de paramètres à définir lorsqu'un service est exécuté.

9. Système de télécommunication selon l'une quelconque des revendications 6 à 8, **caractérisé en ce que** ladite interface d'utilisateur est adaptée de manière à permettre audit serveur d'opérateur (3) de transmettre des informations, définissait des données d'entrée requises lorsqu'un service est exécuté, à un terminal mobile d'abonné (8).

10. Système de télécommunication selon l'une quelconque des revendications 6 à 9, **caractérise en ce que** ladite interface d'utilisateur est sous la forme d'un code HTML.

11. Système de télécommunication selon l'une quelconque des revendications précédentes, **caractérisé en ce que** les terminaux de ladite pluralité de terminaux de téléphone mobile (8) sont adaptés afin de communiquer avec ledit serveur d'opérateur (3).

12. Système de télécommunication selon l'une quelconque des revendications précédentes, **caractérisé en ce que** lesdits moyens de mémorisation de données (4, 7) contiennent une base de données de service (4) et une base de données (7) de services personnalisés par des abonnés, et **en ce que** chacune desdites bases de données (4, 7) est adaptée afin de communiquer avec ledit serveur d'opérateur (3).

13. Système de télécommunication selon l'une quelconque des revendications précédentes, **caractérisé en ce que** ledit système comporte une pluralité de serveurs de fournisseur de service (1, 2), chacun étant adapté afin de communiquer avec ledit serveur d'opérateur (3).

14. Système de télécommunication selon l'une quelconque des revendications précédentes, **caractérisé en ce que**, à la réception d'informations, à partir d'un serveur de fournisseur de service (1,2), qui se rapportent à un nouveau service à valeur ajoutée, ledit serveur d'opérateur (3) affecte une identité unique audit nouveau service à valeur ajoutée.

15. Système de télécommunication selon l'une quelconque des revendications 12 à 14, **caractérisé en ce que** ledit serveur d'opérateur (3) est adapté afin de mémoriser, dans ladite base de données de service (4), lesdites informations associées au service transmise par un serveur de fournisseur de service (1, 2) lors de l'enregistrement d'un nouveau service à valeur ajoutée.

16. Système de télécommunication selon l'une quelconque des revendications 6 à 15, **caractérisé en ce que** ledit système est adapté afin de permettre à un abonné de personnaliser un service offert en définissant des paramètres du service en utilisant ladite interface utilisateur.

17. Système de télécommunication selon la revendication 16, lorsqu'elle est associée à l'une quelconque des revendications 12 à 15, **caractérisé en ce que** ledit système est adapté afin de rendre disponible une fonction d'extraction et de compilation des valeurs de paramètre, attribuées par J'abonné en utilisant l'interface d'utilisateur, et de mémorise lesdites valeurs de paramètre dans ladite base de données (7) de services personnalisés par un abonné.

18. Système de télécommunication selon la revendication 16, ou 17, **caractérisé en ce que** ledit système est adapté afin d'administrer et de commander lesdits services à valeur ajoutée et fournisseurs de service.

19. Système de télécommunications selon l'une quelconque des revendications 12 à 18, **caractérisé en ce que** toutes les demandes de services à valeur ajoutée faites audit serveur d'opérateur (3) provoque l'accès à ladite base de données de service (4), formant ainsi une base afin d'assurer la facturation pour la fourniture desdits services à valeur ajoutée.

20. Plate-forme de service de télécommunication destinée à fournir des services à valeur ajoutée pour transmetteurs mobiles, appropriée à une utilisation avec un système de télécommunication selon l'une quelconque des revendications 1 à 19, **caractérises en ce qu'**il est agencé un serveur d'opérateur de télécommunication (3) adapté afin d'assurer des connexions avec :
une pluralité de terminaux mobiles d'abonnés (8)
au moins un serveur de fournisseur de service (1 , 2), et
des moyens de mémorisation de données (4, 7)
et **en ce que** lesdits moyens de mémorisation (4, 7) contiennent une base de données de services (4) et une base de données (7) de services personnalisés par des abonnés.

21. Procédé de commande d'un système de télécommunication adapté de manière à fournir des services à valeur ajoutée à des abonnés de téléphonie mobile, ledit système de télécommunication comprenant un serveur d'opérateur de télécommunication (3), une pluralité de terminaux mobiles d'abonné (2), au moins un serveur de fournisseur de service (1, 2) et des moyens de mémorisation de données (4, 7),
**caractérisé par le fait que**
ledit au moins un serveur de fournisseur de service (1,2):
communique avec ledit serveur d'opérateur (3)
fournit au moins l'un desdits services à valeur ajoutée pour abonnés de téléphonie mobile ; et
enregistre lesdits services avec ledit serveur d'opérateur (3) en transmettant des informations décrivant chaque service audit serveur d'opérateur (3), lesdites informations associées au service comportant une adresse d'appel à utiliser par ledit serveur d'opérateur (3) lors de l'exécution dudit au moins un desdits services à valeur ajoutée.

22. Procédé selon la revendication 21, **caractérisé par** des services à valeur ajoutée délivrés sous la forme de code source, sans la nécessité de l'exécution du service par le fournisseur de service.

23. Procédé selon la revendication 21 ou 22, **caractérisé par** la commande de comportement d'un service en utilisant au moins une valeur de paramètre qui est ajoutée lorsque le service est appelé.

24. Procédé selon l'une quelconque des revendications 21 à 23, **caractérisé par** l'affectation d'une identité de service unique à chaque service à utiliser lors de l'appel à un service respectif.

25. Procédé selon l'une quelconque des revendications 21 à 24, **caractérise par** ladite adresse d'appel comportant une adresse IP et un numéro de port.

26. Procédé selon l'une quelconque des revendications 21 à 25, **caractérisé par le fait qu'**il comporte dans lesdites informations de service, un ou plusieurs des éléments numériques suivants pour chaque service :
une adresse d'une page d'information par laquelle la compréhension dudit service peut être acquise par l'opérateur, ou les abonnés souhaitant accéder audit service ;
un nom dudit service ; et
une interface d'utilisateur.

27. Procédé selon la revendication 26, **caractérisé par** l'utilisation de ladite interface d'utilisateur afin de sélectionner des paramètres à définir lorsqu'un service est exécuté.

28. Procédé selon la revendication 26, ou 27, **caractérisé par** l'utilisation de ladite interface d'utilisateur afin de transmettre des informations, définissant les données d'entrée requises lorsqu'un service est exécuté, à partir dudit serveur d'opérateur (3) vers un terminal mobile d'abonné (8).

29. Procédé selon l'une quelconque des revendications 21 à 28, **caractérisé par le fait que** ledit serveur d'opérateur (3) communique avec chacun de ladite pluralité de terminaux de téléphonie mobile (8).

30. Procédé selon l'une quelconque des revendications 21 à 29, **caractérisé par le fait que** lesdits moyens de mémorisation de données (4, 7) contiennent une base de données de services (4) et une base de données (7) de services personnalisés par des abonnés, et **par le fait que** chacune desdites bases de données (4, 7) communique avec ledit serveur d'opérateur (3).

31. Procédé selon l'une quelconque des revendications 21 à 30, **caractérisé par le fait que** ledit système comporte une pluralité de serveurs de fournisseur de service (1, 2), et **par le fait que** ledit serveur d'opérateur (3) communique avec chacun desdits serveurs de fournisseur de service (1,2).

32. Procédé selon l'une quelconque des revendications 21 à 31, **caractérisé par le fait que** ledit serveur d'opérateur (3), lors de la réception d'informations à partir d'un serveur de fournisseur de service (1, 2), qui se rapportent à un nouveau service à valeur ajoutée, affecte une identité unique audit nouveau service,

33. Procédé selon l'une quelconque des revendications 30 à 32, **caractérise par le fait que** ledit serveur d'opérateur (3) mémorise, dans ladite base de données de service (4), lesdites informations associées au service transmises par un serveur de fournisseur de service (1, 2) lors de l'enregistrement d'un nouve-a-u service à valeur ajoutée.

34. Procédé selon l'une quelconque des revendications 26 à 33, **caractérisé par** la personnalisation par l'abonné d'un service offert en définissait des paramètres du service en utilisant ladite interface d'utilisateur.

35. Procédé selon la revendication 34 lorsqu'elle est associée à l'une quelconque des revendications 30 à 34, **caractérisé** la mise à disposition d'une fonction d'extraction et de compilation des valeurs de paramètre, affectées par l'abonné en utilisant l'interface d'utilisateur, et par la mémorisation desdites valeurs de paramètre dans ladite base de données (7) de services personnalisés par un abonné.

36. Procédé selon la revendication 34, ou 35, **caractérisé par** l'administration et la commande desdits services à valeur ajoutée et fournisseurs de service par un opérateur.

37. Procédé selon l'une quelconque des revendications 30 à 36, **caractérisé par** la réalisation de la facturation de la mise à disposition desdits services à valeur ajoutée à une abonné sur la base de l'ensemble des demandes faites, par l'abonné, de services à valeur ajoutée audit serveur d'opérateur (3),
